# EUROPEAN PATENT APPLICATION

(11) **EP 3 726 442 A1**
(43) Date of publication of application: **21.10.2020**
(21) Application number: 19193711.9
(22) Date of filing: 27.08.2019
(51) Int. Cl.: G06Q 10/06

(54) **SEMANTIC MODELING AND MACHINE LEARNING-BASED GENERATION OF CONCEPTUAL PLANS FOR MANUFACTURING ASSEMBLIES**

(30) Priority: 18.04.2019 US 201916387976
(71) Applicant: Siemens Industry Software Ltd., 7019900 Airport City (IL)
(72) Inventor: SRIVASTAVA, Sanjeev, Princeton Junction, NJ New Jersey 08550 (US); MICHAELI, David, 69986 Tel Aviv (IL); BLUMENFELD, Rafael, 4336901 Raanana (IL); GRIMM, Stephan, 81825 München (DE); HAMADOU, Mehdi, 91052 Erlangen (DE); LOSKYLL, Matthias, 92318 Neumarkt (DE); ARISOY, Erhan, Princeton, NJ New Jersey 08540 (US)
(74) Representative: Horn Kleimann Waitzhofer Patentanwälte PartG mbB

(57) **Abstract**

A system may include an insighter engine (108) configured to access conceptual plans (210) for previously manufactured products, and a given conceptual plan may include a bill of materials (BoM), a bill of processes (BoP), and a bill of resources (BoR). The insighter engine (108) may be configured to represent the conceptual plans (210) according to an insighter ontology (220) and apply machine learning, using the conceptual plans (210) represented according to the insighter ontology (220) as training data, to learn a manufacturing constraint (25) not already represented in the conceptual plans (210). The system may also include a predictor engine (110) configured to access a BoM (420) for a variant product that differs from the previously manufactured products and apply the learned manufacturing constraint (250) to generate a predicted BoP (430) and a predicted BoR (440) for the BoM (420) of the variant product.

## Description

### BACKGROUND

Computer systems can be used to create, use, and manage data for products and other items. Examples of computer systems include computer-aided design (CAD) systems (which may include computer-aided engineering (CAE) systems), visualization and manufacturing systems, product data management (PDM) systems, product lifecycle management (PLM) systems, and more. These systems may include components that facilitate design and simulated testing of product structures and product manufacture.

### BRIEF DESCRIPTION OF THE DRAWINGS

Certain examples are described in the following detailed description and in reference to the drawings.
Figure 1 shows an example of a computing system that supports ML-based conceptual plan generation.
Figure 2 shows an example of knowledge learning by an insighter engine from conceptual plans of previously manufactured products.
Figure 3 shows an example of training data augmentation by the insighter engine.
Figure 4 shows an example ML-based generation of a conceptual plan through application of previously-learned manufacturing constraints.
Figure 5 shows an example of logic that a system may implement to support ML-based conceptual plan generation.
Figure 6 shows an example of a system that supports ML-based conceptual plan generation.

### DETAILED DESCRIPTION

The discussion below refers to conceptual plans and conceptual planning. Conceptual planning (sometimes referred to as conceptual process planning or conceptual design) may refer any evaluation and manufacturing planning with regards to the manufacturability or manufacturing cost of product assemblies in initial design stages. A conceptual plan may refer to any data record that specifies how a product can be manufactured, and may thus include layouts, designs, requisite resources, operational steps, etc. In some instances, a conceptual plan may include a bill of materials ("BoM") that specifies material elements used to manufacture a given product, a bill of processes ("BoP") that specifies manufacturing processes used to manufacture the given product, and a bill of resources ("BoR") that specifies resources used to perform the manufacturing processes to manufacture the given product. As such, conceptual plans may be used to evaluate, design, and configure manufacturing assemblies and BoRs for use in product manufacture.

Conceptual planning may provide a mechanism to assess the manufacturability and cost of production at earlier points of a product design process, which may be important as significant costs may be invested in product specification and design. However, manufacturability decisions in early design stages can be challenging as such decisions may need to account for unpredictable factors in manufacturability, quality, reliability, serviceability, etc. With current technological advances, products are becoming increasingly complex, and can include millions of parts or more. Moreover, ever-increasing manufacturing capabilities and increasing scales of manufacturing processes (e.g., hundreds of non-modular welding robots in a given manufacturing plant to perform a manufacturing process step) can further complicate generation of conceptual plans. Generation of conceptual plans are often heavily dependent on field experts and are often times create manually, thus requiring significant time investment and are prone to human error.

The disclosure herein may provide systems, methods, devices, and logic for semantic modeling and machine learning ("ML")-based generation of conceptual plans. As described in greater detail herein, various ML techniques may be applied to past conceptual planning data to learn manufacturing constraints (e.g., rules, dependent operations, etc.) for use in automatic conceptual plan generation. In that regard, ML-based generation of conceptual plans may support extraction, capture, and learning of the expertise, experience, and knowledge of human engineers as manifested into prior conceptual plans and modify/populate a semantics definition of the manufacturing process. Such "knowledge" capture may be supported through semantic modeling by using an ontology to define data elements in BoMs, BoPs, and BoRs and denote relationships between defined ontological elements. As such, the various ML-based conceptual plan features described herein may include semantic modeling via ontologies ot support the application of ML techniques and automatic conceptual plan generation.

Captured knowledge (e.g., embedded within instance graphs) may be used as training data for machine learning algorithms, by which new conceptual plans can be generated via learned classifiers, learned manufacture rules (e.g., as part of a model or as learned via local data patterns), or via other machine learning applications. In effect, the ML-based conceptual plan generation features described herein may leverage past conceptual planning data (that may be embedded with implicit knowledge made via human decisions) to extract such "knowledge" in the form of semantic models and to use ML-extracted knowledge in a current workflow to produce a new conceptual plan.

These and other ML-based conceptual plan generation features are described in greater detail herein.

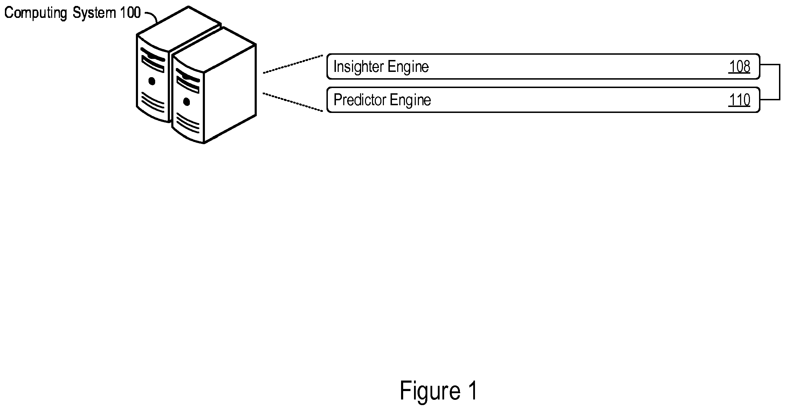

Figure 1 shows an example of a computing system 100 that supports ML-based conceptual plan generation. The computing system 100 may take the form of a single or multiple computing devices such as application servers, compute nodes, desktop or laptop computers, smart phones or other mobile devices, tablet devices, embedded controllers, and more. In some implementations, the computing system 100 implements a conceptual planning program through which a user may access, revise, or automatically generate conceptual plans according to the various ML-based conceptual plan generation features described herein.

As described in greater detail in the present disclosure, the computing system 100 supports ML-based conceptual plan generation. In an insight mode, the computing system 100 may extract "knowledge" from past conceptual plans, which may include representing such conceptual plans according to an insighter ontology. Examples of such representations include instance graphs that the computing system 100 may automatically extract or produce from BoMs, BoPs, and BoRs of previously-manufactured products. The instance graphs may be provided as training data to ML algorithms to learn "knowledge", e.g., manufacturing constraints, from past conceptual planning data. In a predictor mode, the computing system 100 may apply learned knowledge to automatically generate conceptual plans for variant (e.g., new) products. Instead of time-consuming human-driven design of conceptual plans, the computing system 100 may support automatic, ML-based generation of conceptual plans by leveraging learned manufacturing constraints and insight captured using semantic models from prior designs. Accordingly, the ML-based conceptual plan generation features described herein may improve the effectiveness and speed of conceptual planning processes.

As an example implementation to support the ML-based conceptual plan generation features described herein, the computing system 100 shown in Figure 1 includes an insighter engine 108 and a predictor engine 110. The computing system 100 may implement the engines 108 and 110 (including components thereof) in various ways, for example as hardware and programming. The programming for the engines 108 and 110 may take the form of processor-executable instructions stored on a non-transitory machine-readable storage medium and the hardware for the engines 108 and 110 may include a processor to execute those instructions. A processor may take the form of single processor or multi-processor systems, and in some examples, the computing system 100 implements multiple engines using the same computing system features or hardware components (e.g., a common processor or a common storage medium).

In operation, the insighter engine 108 may access conceptual plans for previously manufactured products, wherein a given conceptual plan may include a BoM specifying material elements used to manufacture a given product, a BoP specifying manufacturing processes used to manufacture the given product, and a BoR specifying resources used to perform the manufacturing processes to manufacture the given product. The insighter engine 108 may further represent the conceptual plans according to an insighter ontology, the insighter ontology defining elements of the BoM, BoP, and BoR and relationships between the elements and apply machine learning, using the conceptual plans represented according to the insighter ontology as training data, to learn manufacturing constraints not already represented in the conceptual plans. In operation, the predictor engine 110 may access a BoM for a variant product that differs from the previously manufactured products and apply (at least one of) the learned manufacturing constraints to generate a predicted BoP and a predicted BoR for the variant product.

These and other ML-based conceptual plan generation features according to the present disclosure are described in greater detail next.

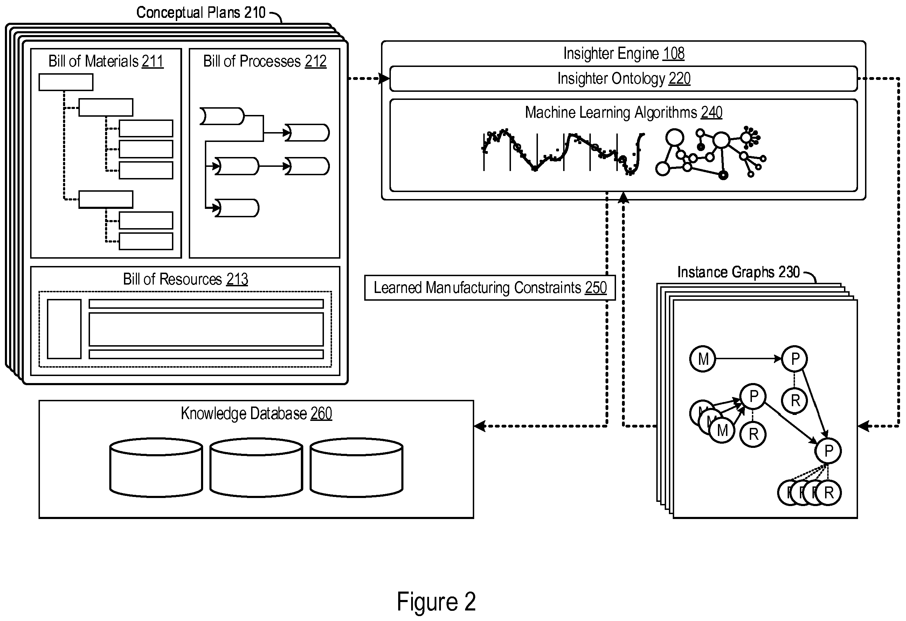

Figure 2 shows an example of knowledge learning by the insighter engine 108 from conceptual plans of previously manufactured products. In that regard, the insighter engine 108 may support operation in an insight mode by the computing system 100 of Figure 1 to support ML-based extraction of manufacturing constraints embedded in conceptual plans of past conceptual planning data.

In Figure 2, the insighter engine 108 accesses a set of conceptual plans labeled as the conceptual plans 210. The conceptual plans 210 may include any form of conceptual planning data for previously manufactured products. For instance, a given conceptual plan may include a BoM 211, a BoP 212, and a BoR 213 that together specify various manufacture details for a given product. The insighter engine 108 may access the conceptual plans 210 from a historical data store that may archive conceptual planning data for completed or prior product designs.

In supporting semantic modeling and ML-based generation of conceptual plans, the insighter engine 108 may support automated analysis of the conceptual plans 210. As such, the insighter engine 108 may implement a capability to generate computer-interpretable representations of domain knowledge or human expertise (e.g., based on past experience and past conceptual plan designs) as manifested in the conceptual plans 210. Such data representation may be supported through semantic modeling using an ontology, such as the insighter ontology 220 shown in Figure 2. The insighter ontology 220 may provide a classification mechanism to define and classify elements of BoMs 211, BoPs 212, and BoRs 213 of the conceptual plans 210. The insighter ontology 220 may further provide a modeling capability to define relationships between such ontologically-defined elements. As illustrative examples, the insighter ontology 220 may define a classification scheme by which the insighter engine 108 may classify various elements of the BoMs 211, BoPs 212, and BoRs 213 into different categories (and ranges of values within different categories), such as plant topology information for resources in a BoR 213, manufacturing machine capabilities, process constraints (e.g., requirement of a combination of load/unload operations to perform a processing step in a BoP 212 to perform a value change on a material element in a BoM 211), etc.

The classification scheme through which the insighter ontology 220 defines ontological elements may vary in form. For instance, the insighter ontology 220 may utilize any of the concepts and features as described in "Towards a Formal Manufacturing Reference Ontology", Zahid Usman, R.I.M. Young, Nitishal Chungoora, Claire Palmer, Keith Case, and J.A. Harding, International Journal of Production Research, Vol 51, No. 22, pp. 6553-657 (2013), which is incorporated herein by reference in its entirety. By using the insighter ontology 220, the insighter engine 108 may encapsulate raw data (e.g., as specified in BoMs 211, BoPs 212, and BoRs 213 of the conceptual plans 210) into a computer-interpretable form. Explained in a different way, the insighter engine 108 may utilize the insighter ontology 220 to produce representations of the conceptual plans 210 (as defined according to the insighter ontology 220) using consistent data modeling terms from which manufacturing constraints can be learned and extracted via ML techniques.

In some implementations, the insighter engine 108 may represent the conceptual plans 210 according to an insighter ontology 220 in the form of instance graphs. In Figure 2, the insighter engine 108 produces the instance graphs 230 from the conceptual plans 210. The insighter engine 108 may do so in such a way that a given instance graph represents a manufacturing plan for a given previously manufactured product (or, put another way, a given one of the conceptual plans 210). Nodes in a given instance graph may represent the ontological elements of the BoM 211, BoP 212, and BoR 213 of the given previously manufactured product, as defined by the insighter ontology 220. Edges in a given instance graph may represent the relationships between the ontological elements. In specific examples, the insighter engine 108 may represent the edges in a given instance graph as manufacturing constraints between the elements, which may capture multi-dimensional dependencies between different material elements, manufacturing processes, and manufacturing processes. In such a manner, the insighter engine 108 may encapsulate a given conceptual plan into an instance graph, and each instance graph may represent a specific instance of how a particular product was manufactured.

To generate the instance graphs 230, the insighter engine 108 may parse conceptual planning data. For instance, the insighter engine 108 may access a given conceptual plan, and parse the BoM 211, BoP 212, and BoR 213 of the given conceptual plan to extract ontological elements (e.g., nodes) as defined by the insighter ontology 220. In such a manner, the insighter engine 108 may construct a respective instance graph for each given conceptual plan, forming edges between ontologically-defined elements extracted from the BoM 211, BoP 212, and BoR 213 based on identified dependencies, constraints, or rules specified in the conceptual planning data.

The insighter engine 108 may apply various ML techniques to conceptual plans 210 represented as the instance graphs 230 according to the insighter ontology 220. For instance, the insighter engine 108 may provide generated instance graphs 230 as training data to any number of ML algorithms. In the example shown in Figure 2, the insighter engine 108 implements the ML algorithms 240, which the insighter engine 108 may access or use to perform machine learning from prepared training data. In a general sense, the insighter engine 108 may apply the ML algorithms 240 to extract meaningful "knowledge" from the training data. For instance, the insighter engine 108 may apply the ML algorithms 240 to determine patterns, efficiencies, and other "knowledge" from the instance graphs 230. Put another way, application of the ML algorithms 240 may result in learning of new manufacturing rules or generation of valuation functions to evaluate past and new conceptual planning data.

As an illustrative example, the ML algorithms 240 may implement a ML-based rule induction approach by which the insighter engine 108 may extract, learn, or capture manufacturing constraints from the training data. Other examples for the ML algorithms 240 include association rules mechanisms, rules learning techniques, or any other rules-based ML techniques that the insighter engine 108 may implement through the ML algorithms 240 to support learning and knowledge extraction from the conceptual plans 210. As such, the insighter engine 108 may support the extraction, learning, and capture of "knowledge" embedded in the conceptual plans 210, specifically in the form of learned manufacturing constraints.

As used herein, a manufacturing constraint may refer to any rule, dependency, limitation, or restriction applicable to manufacture of a product. Manufacturing constraints may be represented as one or more edges between different nodes of the instance graphs 230, for example. In some instances, the insighter engine 108 may learn, via application of the ML algorithms 240, manufacturing constraints not already (expressly) represented in the conceptual plans 210. Learned manufacturing constraints may modify expressly-represented constraints from one or more of the conceptual plans 210, whether by removing redundant dependencies or learning variants of existing constraints. In the context of training data provided as the instance graphs 230, the insighter engine 108 may apply the ML algorithms 240 to learn, identify, or extract paths between nodes of the instance graphs 230 with reduced cost, a lesser number of hops, or according to any other valuation metric.

Manufacturing constraints learned via the ML algorithms 240 may take the form of a ML-model determined from the training data, local patterns in the training data, or combinations thereof. In Figure 2, the insighter engine 108 learns the learned manufacturing constraints 250 via application of the ML algorithms 240 on the instance graphs 230. The learned manufacturing constraints 250 may be converted or contextualized into a representation according to the insighter ontology 220, and stored, e.g., in the form of instance graphs.

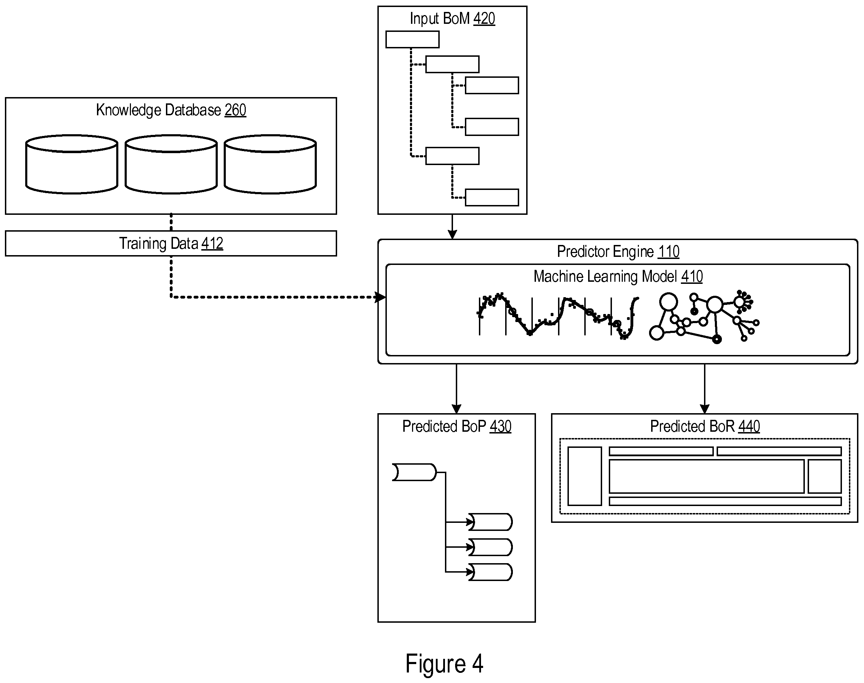

The insighter engine 108 may store the learned manufacturing constraints 250 in a knowledge database 260, which may be local or remote to the insighter engine 108 (or a computing system 100 implementing the insighter engine 108). The knowledge database 260 may be used to store any form of conceptual planning data, and may thus additionally or alternatively store the conceptual plans 210, BoMs 211, BoPs 212, BoRs 213, the instance graphs 230, the insighter ontology 220, etc. In that regard, the knowledge database 260 may provide repository of expressly-specified conceptual planning data (e.g., the conceptual plans 210, as represented by the instance graphs 230), extracted "knowledge" in the form of learned manufacturing constraints 250, and the like. The knowledge database 260 may be accessed for subsequent generation of conceptual plans, e.g., as described in greater detail below with reference to Figure 4.

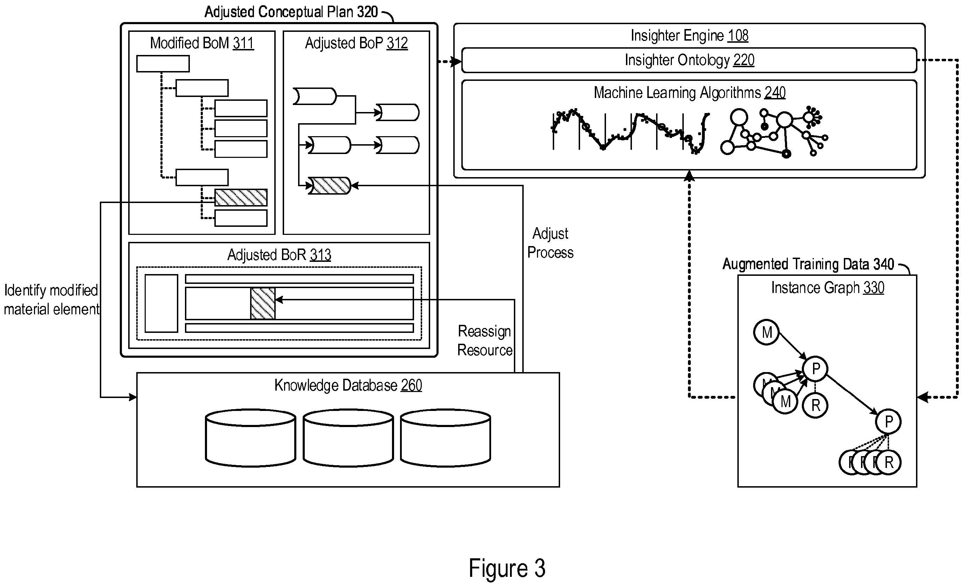

By learning and extracting manufacturing constraints from the instance graphs 230 (or any other form of the conceptual plans 210 as represented according to the insighter ontology 220), the insighter engine 108 may support automatic generation of conceptual plans. However, one challenge faced in ML-based conceptual plan generation is that the ML algorithms 240 may require a significant amount of training data. Example features to augment training data for ML-based conceptual plan generation is described next with reference to Figure 3.

Figure 3 shows an example of training data augmentation by the insighter engine 108. While ML techniques may require relatively larger number of samples in training sets, datasets of conceptual planning may be relatively lesser in number. For instance, the number of conceptual plans may be limited for automotive or aviation vehicles, gas-turbine engines, or other products of high-complexity as the number of existing manufactured products in these fields is relatively low. To support or provide increased amount of training data, the insighter engine 108 may support data augmentation.

To augment training data, the insighter engine 108 may perform data perturbation on past conceptual planning data to produce augmented training data to provide to the ML algorithms 240. In particular, the insighter engine 108 may modify a BoM of a previously manufactured product as a form of data perturbation. In Figure 3, the insighter engine 108 uses data perturbation to produce the modified BoM 311. In modifying pre-existing BoMs, the insighter engine 108 may make a limited change to a selected set of materials in the pre-existing BoM. Example BoM changes include slightly changing the size or weight product components, adding or removing certain product materials or features, etc. BoM changes by the insighter engine 108 may be limited according to perturbation parameters, examples of which may specify a maximum number (or number range) of BoM elements that can be modified in a given perturbation, a maximum degree (or range) of a particular BoM element can be modified, or any other BoM-modification parameters that otherwise control BoM modification by the insighter engine 108. In some instances, each modified BoM 311 produced by the insighter engine 108 differs from a pre-existing BoM by less than a threshold number of a BoM elements.

From a modified BoM 311, the insighter engine 108 may determine an adjusted BoP 312 and an adjusted BoR 313. The insighter engine 108 may make such determinations via a rule-based approach. For instance, the insighter engine 108 may apply user-input rules as provided for specific BoM perturbations applied by the insighter engine 108. In some examples, the insighter engine 108 may apply any number of manufacturing constraints as stored or maintained in the knowledge database 260. As such, the insighter engine 108 may determine the adjusted BoP 312, the adjusted BoR 313, or both by applying one or more learned manufacturing constraints stored in the knowledge database 260. In the specific example shown in Figure 3, the modified BoM 311 includes a modified component size, and the insighter engine 108 determines an adjusted BoP 312 with an adjusted process (e.g., to accommodate the modified component size) and an adjusted BoR 313 with a reassigned resource (e.g., machine capable of performing the adjusted process).

Through BoM perturbation and determination of adjusted BoPs 312 and adjusted BoRs 313, the insighter engine 108 may obtain an adjusted conceptual plan 320. The adjusted conceptual plan may differ from a pre-existing conceptual plan, and may provide another data sample from which the ML algorithms 240 may extract "knowledge" from (e.g., in the form of learned manufacturing constraints). As seen in Figure 3, the insighter engine 108 may represent the adjusted conceptual plan 320 according to the insighter ontology 220 to produce the instance graph 330. The instance graph 330 (along with any other instance graphs for other adjusted conceptual plans) may form a set of augmented training data 340 that the insighter engine 108 may provide to the ML algorithms 240 for training.

In some implementations, the insighter engine 108 may generate augmented training data by directly perturbing instance graphs for previously-manufactured products. In that regard, the insighter engine 108 may directly modify one or more ontological elements (e.g., nodes) of an existing instance graph, such as a node that specifies a particular product component or attribute thereof. Then, the insighter engine 108 may modify any dependent or corresponding nodes to account for the perturbation, e.g., by modifying process or resource ontological elements that depend from the modified material element. In such a way, the insighter engine 108 may support augmentation of training data for ML-based conceptual plan generation.

As yet another training data augmentation feature, the insighter engine 108 may process unstructured conceptual planning data into training data for the ML algorithms 240. Unstructured conceptual planning data can include, as examples, design documents, comments, notes from a human planner during present or prior conceptual planning processes. In such instances, the insighter engine 108 may implement any number of natural language processing ("NLP") capabilities to classify the unstructured data into specific classes (for e.g., materials, processes, resources, etc.). The insighter engine 108 may do so through a ML-based classifier that the insighter engine 108 may implement, e.g., through a deep neural network. From the NLP classification, the insighter engine 108 may apply the insighter ontology 220 to represent any extracted and classified data in a format interpretable by the ML algorithms 240. In effect, and as a particular example, the insighter engine 108 may convert natural language or unstructured data into instance graph elements in accordance with the insighter ontology 220. In doing so, the insighter engine 108 may further augment training data from which the ML algorithms 240 may extract knowledge and learn manufacturing constraints.

Through any of the various insight mode features described herein, the insighter engine 108 may extract knowledge from past conceptual planning data in the form of learned manufacturing constraints, doing so via machine learning. Through such ML-based constraint extraction processes, subsequent generation of conceptual plans may be automated with increased accuracy and effectiveness. Example features of ML-based generation of conceptual plans via application of learned manufacturing constraints are described next with reference to Figure 4.

Figure 4 shows an example ML-based generation of a conceptual plan through application of previously-learned manufacturing constraints. In that regard, the predictor engine 110 may support operation in a predictor mode by the computing system 100 of Figure 1 to support ML-based generation of conceptual plans. In the example shown in Figure 4, the predictor engine 110 may leverage any of the data stored in the knowledge database 260 to support automated or ML-based conceptual plan generation. That is, the predictor engine 110 may leverage any number of expressly-specified or learned manufacturing constraints in order to generate conceptual plans for a current workflow.

In some implementations, the predictor engine 110 may train machine learning models to generate conceptual planning data. For instance, the predictor engine 110 may train the ML model 410 shown in Figure 4 via any number of ML techniques, and the ML model 410 may be trained or otherwise configured to map input BoMs to output BoPs and BoRs. To train the ML model 410, the predictor engine 110 may access stored instance graphs (or other conceptual planning data) from the knowledge database as training data, shown in Figure 4 as the training data 412. The instance graphs may, in some cases, represent learned manufacturing constraints as extracted from conceptual plans 210 of previously-manufactured products. In some examples, the predictor engine 110 trains the ML model 410 as a deep neural network via the training data 412 accessed from the knowledge database 260.

Via the ML model 410 or in various other ways, the predictor engine 110 may automatically generate conceptual plans. In particular, the predictor engine 110 may automatically generate predicted BoPs and predicted BoRs from input BoMs. To illustrate through Figure 4, the predictor engine 110 may receive an input BoM 420. The input BoM 420 may be a BoM for a current workflow of a next-generation or brand new product. In that regard, the input BoM 420 may be a BoM for a variant product in that the variant product differs from the previously manufactured products. From the input BoM 420, the predictor engine 110 may generate the predicted BoP 430 and the predicted BoR 440 for the variant product, doing so by applying any number learned manufacturing constraints, e.g., as extracted from previously-manufactured products via the ML algorithms 240, stored in the knowledge database 260, or provided as training data 412 to train a classifier implemented by the ML model 410.

The predictor engine 110 may generate the predicted BoP 430 or the predicted BoR 440 in a template-based manner. For instance, the predictor engine 110 may compare the input BoM 420 to BoMs stored in the knowledge database 260. For any stored BoM that exceeds a similarity threshold from the input BoM 420 (e.g., above a similarity threshold percentage of identical material elements or component properties), the predictor engine 110 may use the corresponding BoP and BoR of the stored BoM as a baseline template to modify into the predicted BoP 430 and predicted BoR 440. In doing so, the predictor engine 110 may identify new requirements, product components, or changes between the input BoM and an identified BoM, adapting the baseline templates of corresponding BoP and BoR to address the changes included in the input BoM. Moreover, the predictor engine 110 may apply one or more learned manufacturing constraints to ensure that any adaptations to the BoP and BoR baseline templates do not violate any identified or learned manufacturing constraints. In other implementations, the predictor engine 110 may generate the predicted BoP 430 or the predicted BoR 440 without reference or reliance on a baseline template, e.g., using the ML model 410 to construct a new BoP or BoR from the input BoM 420.

In a such a manner, the predictor engine 110 may support ML-based automatic generation of conceptual plans. In accordance with the various features described herein, the predictor engine 110 may provide additional or alternative features to process input BoMs 420 and assist in conceptual planning. For example, the predictor engine 110 may automatically search and identify similar or relevant past conceptual planning data from the knowledge database 260, e.g., according to similarity thresholds, and process the input BoM 420 accordingly. As such, the predictor engine 110 may identify one or more processes (in a BoP) that require modification based on the input BoM 420 and suggest BoP and BoR adaptations, including plant resource assignments for the identified processes.

In some implementations, the predictor engine 110 may validate the predicted BoP 430 and predicted BoR 440 generated for a variant product. As a specific example, the predictor engine 110 may evaluate impact and risk of process adaptations specified in the predicted BoP 430 and plant reconfigurations as specified in the predicted BoR 440. The predictor engine 110 may, for example, validate the predicted BoP 430 and the predicted BoR 440 using simulation and according to a selected set of key performance indicators (KPIs). In doing so, the predictor engine 110 may provide an assessment of how an automatically generated conceptual plan (or BoP and BoR components thereof) may perform based on the KPIs or any other configurable validation parameters.

As described herein, ML-based conceptual plan generation features may utilize historic conceptual planning data (e.g., BoM/BoP/BoR data) for learning BoM/BoP/BoR-mappings via semantic models and determining explicit and learned manufacturing constraints in conceptual plans. In that sense, the semantic modeling and ML-based conceptual plan generation features described herein may identify, extract, and capture patterns and knowledge embedded in previous conceptual planning designs and leverage the learned constraints in subsequent conceptual plan generation.

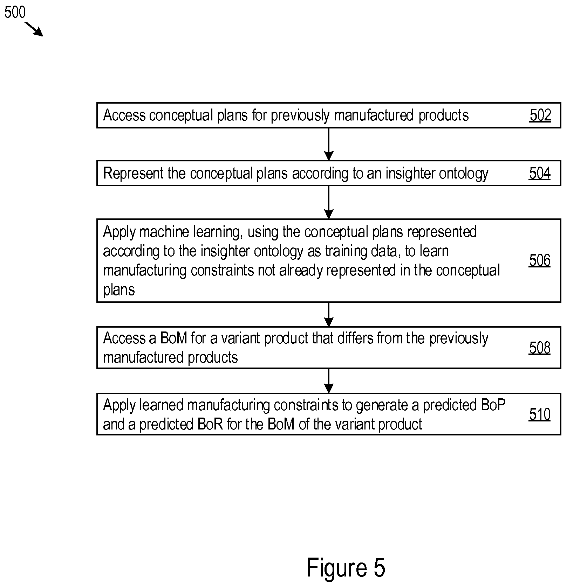

Figure 5 shows an example of logic 500 that a system may implement to support ML-based conceptual plan generation. For example, the computing system 100 may implement the logic 500 as hardware, executable instructions stored on a machine-readable medium, or as a combination of both. The computing system 100 may implement the logic 500 via the insighter engine 108 and the predictor engine 110, through which the computing system 100 may perform or execute the logic 500 as a method to support semantic modeling and ML-based conceptual plan generation. The following description of the logic 500 is provided using the insighter engine 108 and the predictor engine 110 as examples. However, various other implementation options by the computing system 100 are possible.

In implementing the logic 500, the insighter engine 108 may access conceptual plans for previously manufactured products (502), and a given conceptual plan may include a BoM specifying material elements used to manufacture a given product, a BoP specifying manufacturing processes used to manufacture the given product, and a BoR specifying resources used to perform the manufacturing processes to manufacture the given product. The insighter engine 108 may further represent the conceptual plans according to an insighter ontology (504), the insighter ontology defining elements of the BoM, BoP, and BoR and relationships between the elements, as well as apply machine learning, using the conceptual plans represented according to the insighter ontology as training data, to learn a manufacturing constraint not already represented in the conceptual plans (506).

In implementing the logic 500, the predictor engine 110 may access a BoM for a variant product that differs from the previously manufactured products (508) and apply the learned manufacturing constraint to generate a predicted BoP and a predicted BoR for the BoM of the variant product (510).

The logic 500 shown in Figure 5 provides but one example by which a computing system 100 may support ML-based conceptual plan generation. Additional or alternative steps in the logic 500 are contemplated herein, including according to any features described for the insighter engine 108, predictor engine 110, or any combinations thereof.

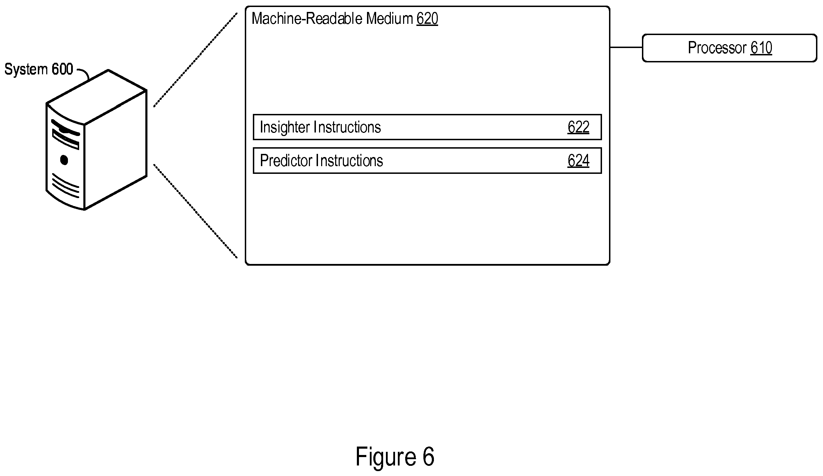

Figure 6 shows an example of a system 600 that supports ML-based conceptual plan generation. The system 600 may include a processor 610, which may take the form of a single or multiple processors. The processor(s) 610 may include a central processing unit (CPU), microprocessor, or any hardware device suitable for executing instructions stored on a machine-readable medium. The system 600 may include a machine-readable medium 620. The machine-readable medium 620 may take the form of any non-transitory electronic, magnetic, optical, or other physical storage device that stores executable instructions, such as the insighter instructions 622 and the predictor instructions 624 shown in Figure 6. As such, the machine-readable medium 620 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The system 600 may execute instructions stored on the machine-readable medium 620 through the processor 610. Executing the instructions (e.g., the insighter instructions 622 and/or the predictor instructions 624) may cause the system 600 to perform any of the semantic modeling and ML-based conceptual plan generation features described herein, including according to any of the features with respect to the insighter engine 108, the predictor engine 110, or a combination of both.

For example, execution of the insighter instructions 622 by the processor 610 may cause the system 600 to access conceptual plans for previously manufactured products, wherein a given conceptual plan may comprise a BoM specifying material elements used to manufacture a given product, a BoP specifying manufacturing processes used to manufacture the given product, and a BoR specifying resources used to perform the manufacturing processes to manufacture the given product. Execution of the insighter instructions 622 by the processor 610 may further cause the system 600 to represent the conceptual plans according to an insighter ontology, the insighter ontology defining elements of the BoM, BoP, and BoR and relationships between the elements, and apply machine learning, using the conceptual plans represented according to the insighter ontology as training data, to learn a manufacturing constraint not already represented in the conceptual plans.

Execution of the predictor instructions 624 by the processor 610 may cause the system 600 to access a BoM for a variant product that differs from the previously manufactured products and apply the learned manufacturing constraint to generate a predicted BoP and a predicted BoR for the BoM of the variant product.

Any additional or alternative features as described herein may be implemented via the insighter instructions 622, predictor instructions 624, or a combination of both.

The systems, methods, devices, and logic described above, including the insighter engine 108 and the predictor engine 110, may be implemented in many different ways in many different combinations of hardware, logic, circuitry, and executable instructions stored on a machine-readable medium. For example, the insighter engine 108, the predictor engine 110, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the insighter engine 108, the predictor engine 110, or combinations thereof.

The processing capability of the systems, devices, and engines described herein, including the insighter engine 108 and the predictor engine 110, may be distributed among multiple system components, such as among multiple processors and memories, optionally including multiple distributed processing systems or cloud/network elements. Parameters, databases, and other data structures, including the knowledge database 260, may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible.

## Claims

1. A method comprising:
by a computing system (100, 600):
accessing (502) conceptual plans (210) for previously manufactured products, wherein a given conceptual plan (210) comprises:
a bill of materials (BoM) (211) specifying material elements used to manufacture a given product;
a bill of processes (BoP) (212) specifying manufacturing processes used to manufacture the given product; and
a bill of resources (BoR) (213) specifying resources used to perform the manufacturing processes to manufacture the given product; and
representing (504) the conceptual plans (210) according to an insighter ontology (220), the insighter ontology (220) defining elements of the BoM (211), BoP (212), and BoR (213) and relationships between the elements;
applying (506) machine learning, using the conceptual plans (210) represented according to the insighter ontology (220) as training data, to learn a manufacturing constraint (250) not already represented in the conceptual plans (210);
accessing (508) a BoM (420) for a variant product that differs from the previously manufactured products; and
applying (510) the learned manufacturing constraint to generate a predicted BoP (430) and a predicted BoR (440) for the BoM (420) of the variant product.

2. The method of claim 1, comprising representing the conceptual plans (210) according to the insighter ontology (220) as instance graphs (230), wherein:
a given instance graph represents a given previously manufactured product;
nodes in the given instance graph represent the elements of the BoM (211), BoP (212), and BoR (213) of the given previously manufactured product as defined by the insighter ontology (220); and
edges in the given instance graph represent the relationships between the elements.

3. The method of claim 2, comprising representing the edges in the given instance graph as manufacturing constraints between the elements.

4. The method of claim 1, further comprising storing multiple learned manufacturing constraints (250) learned through application of the machine learning in a knowledge database (260).

5. The method of claim 4, further comprising training a machine learning model (410) using training data (412) that comprises the learned manufacturing constraints (250) stored in the knowledge database (260), wherein:
the machine learning model (410) is configured to map input BoMs to output BoPs and BoRs; and
comprising generating the predicted BoP (430) and the predicted BoR (440) for the variant product through the machine learning model (410).

6. The method of claim 4, further comprising generating augmented training data (340) to apply the machine learning to, including by:
modifying a BoM of a previously manufactured product;
determining an adjusted BoP (312) and adjusted BoR (313) for the modified BoM by applying at least one of the learned manufacturing constraints (250) stored in the knowledge database (260); and
representing an adjusted conceptual plan (320) comprising the modified BoM (311), the adjusted BoP (312), and the adjusted BoM (313) according to the insighter ontology (220).

7. The method of claim 1, further comprising validating the predicted BoP (430) and the predicted BoR (440) using simulation and according to a selected set of key performance indicators (KPIs).

8. A system comprising:
an insighter engine (108) configured to:
access conceptual plans (210) for previously manufactured products, wherein a given conceptual plan comprises:
a bill of materials (BoM) (211) specifying material elements used to manufacture a given product;
a bill of processes (BoP) (212) specifying manufacturing processes used to manufacture the given product; and
a bill of resources (BoR) (213) specifying resources used to perform the manufacturing processes to manufacture the given product; and
represent the conceptual plans (210) according to an insighter ontology (220), the insighter ontology (220) defining elements of the BoM (211), BoP (212), and BoR (213) and relationships between the elements; and
apply machine learning, using the conceptual plans (210) represented according to the insighter ontology (220) as training data, to learn a manufacturing constraint (250) not already represented in the conceptual plans (210); and
a predictor engine (110) configured to:
access a BoM (420) for a variant product that differs from the previously manufactured products; and
apply the learned manufacturing constraint (250) to generate a predicted BoP (430) and a predicted BoR (440) for the BoM (420) of the variant product.

9. The system of claim 8, wherein the insighter engine (108) is configured to represent the conceptual plans (210) according to the insighter ontology (220) as instance graphs (230), wherein:
a given instance graph represents a given previously manufactured product;
nodes in the given instance graph represent the elements of the BoM (211), BoP (212), and BoR (213) of the given previously manufactured product as defined by the insighter ontology (220); and
edges in the given instance graph represent the relationships between the elements.

10. The system of claim 9, wherein the insighter engine (108) is configured to represent the edges in the given instance graph as manufacturing constraints between the elements.

11. The system of claim 8, further comprising a knowledge database (260) configured to store learned manufacturing constraints (250) learned by the insighter engine (108) through application of the machine learning.

12. The system of claim 11, wherein the predictor engine (110) is further configured to train a machine learning model (410) using training data (412) that comprises the learned manufacturing constraints (250) stored in the knowledge database (260), wherein:
the machine learning model (410) is configured to map input BoMs to output BoPs and BoRs; and
wherein the predictor engine (110) is configured to generate the predicted BoP (430) and the predicted BoR (440) for the variant product through the machine learning model (410).

13. The system of claim 11, wherein the insighter engine (108) is further configured to generate augmented training data (340) to apply the machine learning to, including by:
modifying a BoM of a previously manufactured product;
determining an adjusted BoP (312) and adjusted BoR (313) for the modified BoM (311) by applying at least one of the learned manufacturing constraints (250) stored in the knowledge database (260); and
representing an adjusted conceptual plan (320) comprising the modified BoM (311), the adjusted BoP (312), and the adjusted BoM (313) according to the insighter ontology (220).

14. The system of claim 8, wherein the predictor engine (110) is further configured to validate the predicted BoP (430) and the predicted BoR (440) using simulation and according to a selected set of key performance indicators (KPIs) .

15. A non-transitory machine-readable medium (620) comprising instructions (622, 624) that, when executed by a processor (610), cause a system (600) to perform a method according to any of claims 1-7.
